# EUROPEAN PATENT APPLICATION

(11) **EP 4 152 051 A1**
(43) Date of publication of application: **22.03.2023**
(21) Application number: 22194451.5
(22) Date of filing: 07.09.2022
(51) Int. Cl.: G01S 13/86, G01S 13/87, G01S 13/931

(54) **PARKING SENSOR SYSTEM**

(30) Priority: 16.09.2021 GB 202113260
(71) Applicant: Aptiv Technologies Limited, St. Michael (BB)
(72) Inventor: BORNEMANN, Martin, Dublin, 2 (IE); VINCI, Gabor, Dublin, 2 (IE)
(74) Representative: Lewis Silkin LLP

(57) **Abstract**

Parking sensor system for a vehicle (1). The system includes one or more sensor assemblies (4) for mounting to elevated mounting locations (8,9,10) on the vehicle (1), each including a RADAR sensor (7) having a downwardly facing field of view for detecting objects below the respective elevated mounting location (8,9,10) during a parking operation. At least one of the sensor assemblies (4) may further include a parking camera (6) having a downwardly facing field of view for viewing objects below the elevated mounting location (8,9,10) during the parking operation.

## Description

### Introduction

The present disclosure relates to a parking sensor system and, in particular, an automotive park distance control system with camera view. The disclosure also concerns a vehicle incorporating a parking sensor system and an arrangement of vehicle camera and radar sensors for surround view applications.

### Background

It is common for modern vehicles to incorporate parking sensor systems to assist in parking the vehicle, either by providing the driver with feedback or providing positional data for autonomous driving systems. Conventionally, such systems use an array of ultrasonic distance sensors located in the vehicle's bumper, with the transmitted ultrasonic sound from each sensor being reflected back to provide a linear distance measurement of objects in front of each respective sensor. This typically provides a distance measurement range of around 5 meters down to a few centimetres from each sensor surface.

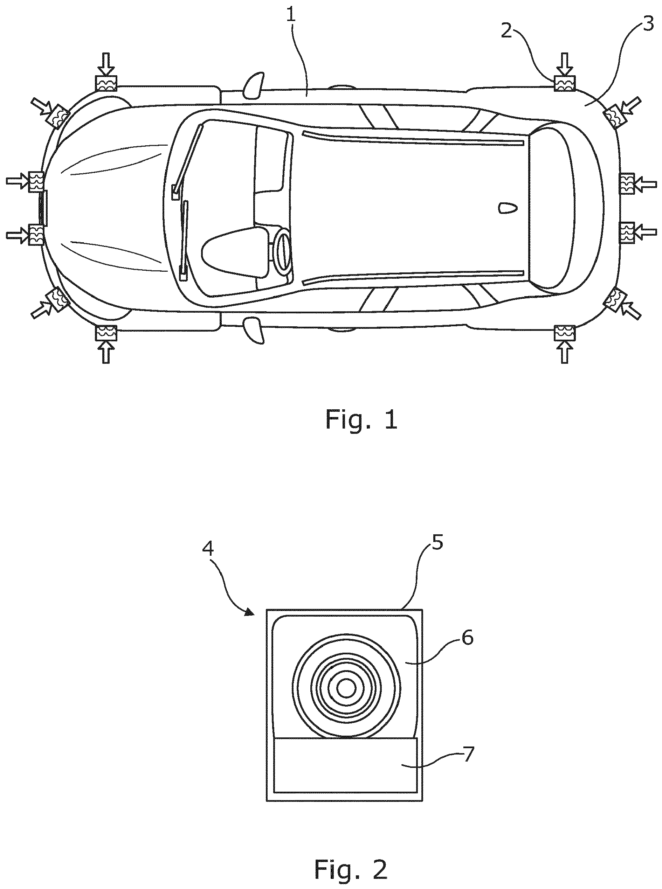

Figure 1 shows an above schematic view of a typical conventional ultrasonic parking sensor system fitted to a vehicle 1. As shown, in order to provide the required resolution and field of view, four ultrasonic sensors 2 are located in each front and rear bumpers 3 of the vehicle 1 in order to detect objects in the space in front of each bumper 3 surface. An additional two sensors are also provided at the sides of each bumper 3 in order to provide object detection over the left and right sides of the vehicle 1.

The ultrasonic sensors 2 will typically be connected to one central electronic control unit (ECU) for providing the vehicle's park distance control (PDC) application. That said, in alternative arrangements, the PDC function is integrated into a central Advanced Driver Assistance System (ADAS) domain controller, and all sensors may be directly connected to the ADAS domain controller in such arrangements. Distance feedback during vehicle parking operations may be provided to the driver using an acoustic based Human Machine Interface (HMI), with different beep tone frequencies providing information about the distance to the obstacle. In many modern PDC implementations, a visible HMI may also be provided on a display which shows the distance and approximate location to an obstacle based on the measurements from each ultrasonic based sensor.

At the same time as the above, situational parking cameras providing video feeds of the areas around the periphery of the vehicle are also becoming very common. Indeed, in some territories, it is now mandatory to include at least a reversing camera to provide the driver with a video feed of the environment ahead of the rear of the vehicle while the vehicle is reversing. Furthermore, many modern vehicles provide a full 360° above-view of the vehicle surroundings by generating a composite from a plurality of parking cameras located around the vehicle. These parking cameras are mounted at a higher location on the vehicle 1 compared to the bumper mounted ultrasonic sensors in order to provide a downwardly facing view to allow the driver to have an accurate perception of the space between the peripheral surface of the vehicle (e.g. the bumper) and adjacent objects. At the same time, the cameras also typically have a horizontal field of view of 180° in order to minimise the number of cameras needed to provide full coverage over the entire periphery of the vehicle. As such, four cameras will typically be used to provide coverage across the front and rear bumpers and the vehicle's two sides.

The situational cameras are typically used in conjunction with the ultrasonic sensors to provide a combined parking sensor system for allowing the driver to view the areas around the vehicle's periphery and receive a distance feedback alert if an object is getting close to contacting the vehicle. However, such systems will typically require four elevated mounting locations to be provided for the parking cameras, together with twelve mounting locations in the vehicle bumpers for the ultrasonic sensors. Added to this total of sixteen mounting locations for the cameras and ultrasonic sensors, is the associated wiring and interfaces. As a consequence, parking sensor systems are relatively expensive to implement, and introduce additional complexity to both structural and wiring harness features.

In view of the above, there is a need for an improved parking sensor system.

### Summary

According to a first aspect, there is provided a parking sensor system for a vehicle, including: one or more sensor assemblies for mounting to an elevated mounting location on the vehicle, each including a RADAR sensor having a downwardly facing field of view for detecting objects below the elevated mounting location during a parking operation.

In embodiments, the one or more sensor assemblies are a plurality of sensor assemblies.

In embodiments, at least one of the sensor assemblies further includes a parking camera having a downwardly facing field of view for viewing objects below the elevated mounting location during the parking operation.

In embodiments, the at least one sensor assembly including both a RADAR sensor and a parking camera further includes a mounting for supporting the RADAR sensor and the parking camera adjacent to one another.

In embodiments, the at least one sensor assembly including both a RADAR sensor and a parking camera further includes a housing for enclosing the RADAR sensor and the parking camera.

In embodiments, the parking sensor system further includes a RADAR sensor housing for enclosing the RADAR sensor and a parking camera housing for enclosing the parking camera.

In embodiments, each RADAR sensor is configured to generate a RADAR output for determining a distance between a detected object and a periphery of the vehicle.

In embodiments, the parking sensor system further includes a processor for receiving RADAR outputs from the RADAR sensors and calculating distances between detected objects and the periphery of the vehicle.

In embodiments, the processor is configured to generate a representation of the distances between detected objects and the periphery of the vehicle.

In embodiments, the representation is at least one of an audible signal and a visual indicator.

In embodiments, each parking camera is configured to generate a video output and the processor is configured to receive the video outputs and process these in combination with the RADAR outputs.

In embodiments, the processor is configured to generate an augmented video output combining the video outputs with visual indicators representing the distances between detected objects and the periphery of the vehicle.

In embodiments, at least four sensor assemblies are provided for mounting to elevated mounting locations distributed around the vehicle.

In embodiments, the RADAR sensors in the at least four sensor assemblies have a field of view for detecting objects distanced from a periphery of the vehicle associated with a respective mounting location.

In embodiments, the at least four sensor assemblies further include parking cameras.

In embodiments, each parking camera has a field of view for viewing an area adjacent to a periphery of the vehicle associated with a respective mounting location.

In embodiments, the at least four sensor assemblies provide a combined field of view surrounding the vehicle.

According to a second aspect there is provided a vehicle including a parking sensor system, the parking sensor system including: a plurality of sensor assemblies mounted to elevated mounting locations on the vehicle, each including a RADAR sensor having a downwardly facing field of view for detecting objects below the elevated mounting location during a parking operation, and wherein at least one of the sensor assemblies further includes a parking camera having a downwardly facing field of view for viewing objects below the elevated mounting location during a parking operation.

### Brief Description of Drawings

Illustrative embodiments will now be described with reference to the accompanying drawings in which:
Figure 1 shows an above schematic view of a conventional ultrasonic parking sensor system fitted to a vehicle;
Figure 2 shows a front view of a sensor assembly used in the parking sensor system according to a first embodiment;
Figure 3 shows a rear perspective schematic view of a vehicle incorporating a parking sensor system according to the first embodiment; and
Figure 4 shows an above schematic view of a vehicle incorporating the parking sensor system shown in figure 3.

### Detailed Description

A parking sensor system according to a first illustrative embodiment will now be described with reference to Figures 2 to 4.

Figure 2 shows a sensor assembly 4 used in the parking sensor system of the first embodiment. The sensor assembly 4 includes a camera module 6 and a RADAR sensor 7. In this embodiment, the camera module 6 and the RADAR sensor 7 are mounted within a common housing 5. However, it will be understood that in other embodiments, the camera module 6 and the RADAR sensor 7 may have separate housings and be fixed to a mounting, adjacent to one another. The camera module 6 and a RADAR sensor 7 are fixed within their mountings such that when mounted onto a vehicle, they have a downward facing field of view. The field of views of the camera modules 6 and a RADAR sensors 7 are configured to span the respective periphery of the vehicle associated with their mounting location. As such, each sensor assembly 4 may provide both camera and RADAR field of views covering a respective complete side or end of the vehicle 1.

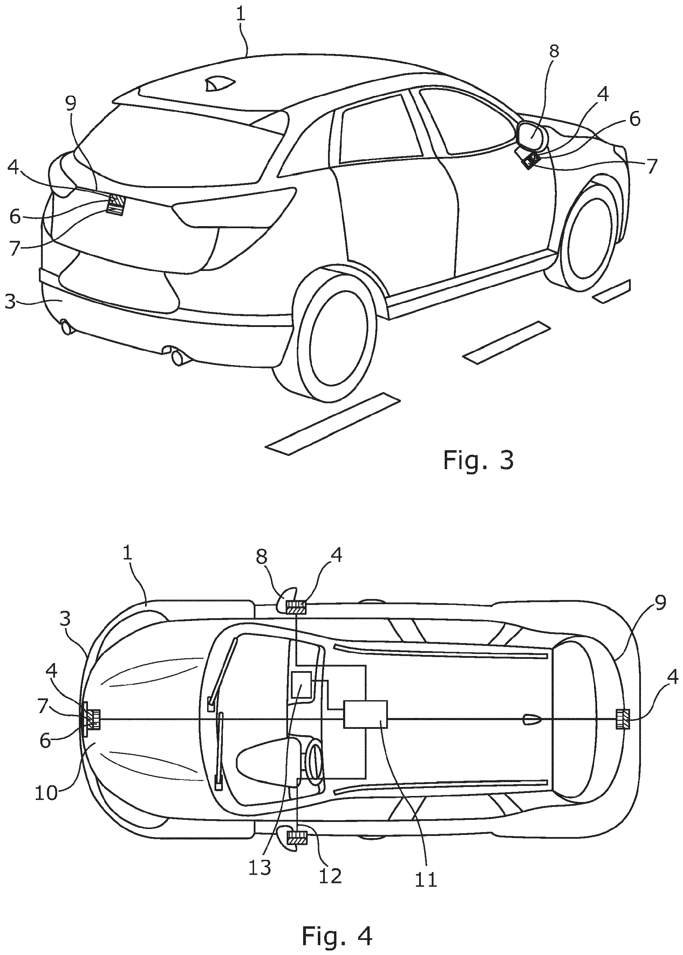

Figure 3 shows a rear perspective schematic view of vehicle 1 incorporating the parking sensor system according to the first embodiment. As will be understood, the parking sensor system is used to provide a driver, or an autonomous driving system, with situational awareness of objects surrounding the periphery of the vehicle. This periphery will typically be defined by the vehicle's front and rear bumpers 3, and the vehicle's side panels therebetween. These parts therefore define the perimeter of a footprint of a vehicle when viewed from above. At the same time, locations on the vehicle above the surfaces defining this perimeter, such as locations above the bumper 3, may be considered to be elevated locations in that they are above the vehicle's most peripheral surfaces.

In this respect, as shown in Figure 3, a plurality of the sensor assemblies 4 shown in Figure 2 are fixed to a plurality of elevated mounting locations on the vehicle 1. In this embodiment, four sensor assemblies 4 are used for providing fields of view covering the vehicle's front and rear ends, and its sides. Specifically, in this embodiment, a sensor assembly 4 associated with the rear of the vehicle 1 is mounted to the vehicle's tailgate 9, and two sensor assemblies 4 associated with the sides of the vehicle 1 are mounted beneath the vehicle's wing mirrors 8. As shown in Figure 4, a sensor assembly 4 associated with the front of the vehicle 1 is mounted to the vehicle's front grill.

The above schematic view of the vehicle 1 shown in Figure 4 further shows the interface connections 12 between each sensor assembly 4 and an electronic control unit (ECU) 11. In this embodiment, the electronic control unit 11 is a central electronic control unit (ECU) for providing the vehicle's park distance control (PDC) application. In alternative embodiments, the ECU 11 may be a central advanced driver assistance system (ADAS) domain controller. In this embodiment, the ECU 11 includes an I/O interface for receiving inputs from the camera modules 6 and RADAR sensors 7, and for outputting display data to a display 13 provided within the vehicle's interior. The ECU 11 further includes a microprocessor for processing the inputs and generating the display data.

In this embodiment, the camera module 6 and RADAR sensor 7 within each sensor assembly 4 shares a common interface connection 12 to the ECU 11. This sharing of a data interface and interface cable provides for cost savings and reduces installation complexity. That said, in other embodiments, separate data interfaces and interface cables may be provided for connecting the camera modules and radar sensors independently. Such independent connections may simplify connection to different ECUs within the vehicle.

In use, during a parking operation where the vehicle is being parked, the output from each RADAR sensor 7 is processed by the ECU 11 to provide object detection and distance determination, thereby replicating the functionality of the conventional ultrasonic parking sensor systems. At the same time, the camera modules 6 provide a video feed for visualisation of the surrounding area. Accordingly, the downfacing configuration of the camera modules 6 and RADAR sensors 7 within each sensor assembly 4, together with their elevated mounting locations, provide camera and RADAR fields of view around the periphery of the vehicle 1. The output feeds from the camera module and RADAR sensors are processed by the ECU 11 and output to a Human Machine Interface (HMI). In this embodiment, the Human Machine Interface (HMI) is implemented using the video display 13 within the vehicle for displaying a composite 360° above-vehicle view of the surroundings, augmented by a distance indicator for showing distance between objects and the periphery of the vehicle 1. In this way, the driver is provided with a representation of distances between detected objects and the periphery of the vehicle, in addition to being able to visualise the surroundings.

With the above, unlike ultrasonic sensors, the downfacing mounting allows the RADAR sensor 7 to be installed in the same elevated locations as the camera modules 6. That is, both camera and RADAR components may be installed in the same mounting compartments on the vehicle. Accordingly, rather than the sixteen mountings required by typical conventional camera/ultrasonic parking systems, a complete 360° field of view may be provided using only four mounting locations, namely, the front, rear and side locations.

Two sensor technologies may therefore be combined in the same position on the vehicle for simplifying installation and minimising costs, whilst still facilitating obstacle detection, distance measurement, and providing visualization of the surrounding area during vehicle parking.

It will be understood that the embodiments illustrated above shows an application only for the purposes of illustration. In practice, embodiments may be applied to many different configurations, the detailed embodiments being straightforward for those skilled in the art to implement.

For example, it will be understood that not all the sensor assemblies require a camera module. For instance, a camera module may be incorporated into the rear sensor assembly, or the front and rear sensor assembly, with the remaining sensor assemblies including the RADAR sensors only. Such configurations may thereby provide obstacle detection and distance measurement using the RADAR sensors in their downfacing orientation, with the camera modules aiding the driver's awareness by providing a rear, or front and rear, video feed.

It will also be understood that whilst the above illustrative embodiment has been described as providing a Human Machine Interface (HMI), the parking sensor system may also be used to implement automatic parking as part of a vehicle's autonomous driving functionality. For example, the RADAR sensors 7 may provide positional information, with image recognition processing of the feeds from the camera modules 6 being used to identify the location of curbs or other road features.

## Claims

1. A parking sensor system for a vehicle, comprising:
one or more sensor assemblies for mounting to an elevated mounting location on the vehicle, each comprising a RADAR sensor having a downwardly facing field of view for detecting objects below the elevated mounting location during a parking operation.

2. A parking sensor system according to claim 1, wherein at least one of the sensor assemblies further comprises a parking camera having a downwardly facing field of view for viewing objects below the elevated mounting location during the parking operation.

3. A parking sensor system according to claim 2, wherein the at least one sensor assembly comprising both a RADAR sensor and a parking camera further comprises a mounting for supporting the RADAR sensor and the parking camera adjacent to one another.

4. A parking sensor system according to claim 2 or 3, wherein the at least one sensor assembly comprising both a RADAR sensor and a parking camera further comprises a housing for enclosing the RADAR sensor and the parking camera.

5. A parking sensor system according to any preceding claim, wherein each RADAR sensor is configured to generate a RADAR output for determining a distance between a detected object and a periphery of the vehicle.

6. A parking sensor system according to claim 5, further comprising a processor for receiving RADAR outputs from the RADAR sensors and calculating distances between detected objects and the periphery of the vehicle.

7. A parking sensor system according to claim 6, wherein the processor is configured to generate a representation of the distances between detected objects and the periphery of the vehicle.

8. A parking sensor system according to claim 7, wherein the representation is at least one of an audible signal and a visual indicator.

9. A parking sensor system according to any of claims 6 to 8, wherein each parking camera is configured to generate a video output and the processor is configured to receive the video outputs and process these in combination with the RADAR outputs.

10. A parking sensor system according to any preceding claim, wherein the processor is configured to generate an augmented video output combining the video outputs with visual indicators representing the distances between detected objects and the periphery of the vehicle.

11. A parking sensor system according to any preceding claim, wherein at least four sensor assemblies are provided for mounting to elevated mounting locations distributed around the vehicle.

12. A parking sensor system according to claim 11, wherein the RADAR sensors in the at least four sensor assemblies have a field of view for detecting objects distanced from a periphery of the vehicle associated with a respective mounting location.

13. A parking sensor system according to claim 12, wherein the at least four sensor assemblies further comprise parking cameras.

14. A parking sensor system according to claim 13, wherein each parking camera has a field of view for viewing an area adjacent to a periphery of the vehicle associated with a respective mounting location.

15. A parking sensor system according to any of claims 12 to 14, wherein the at least four sensor assemblies provide a combined field of view surrounding the vehicle.
